(19) **Europäisches Patentamt / European Patent Office / Office européen des brevets**

(11) **EP 4 181 093 A1**

(12) **EUROPEAN PATENT APPLICATION**
published in accordance with Art. 153(4) EPC

(43) Date of publication:
**17.05.2023 Bulletin 2023/20**

(21) Application number: **20946434.6**

(22) Date of filing: **22.07.2020**

(51) International Patent Classification (IPC):
**G07C /** *(2006.01)*

(86) International application number:
**PCT/CN2020/103530**

(87) International publication number:
**WO 2022/016419 (27.01.2022 Gazette 2022/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventor: **PENG, Jianfen
Shenzhen, Guangdong 518129 (CN)**

(74) Representative: **Huawei European IPR
Huawei Technologies Duesseldorf GmbH
Riesstraße 25
80992 München (DE)**

(54) **AUTHENTICATION DETECTION METHOD, APPARATUS AND SYSTEM**

(57)  Embodiments of this application provide an authentication detection method, apparatus, and device. The method includes: A first device obtains authentication packet information, where the authentication packet information is used to indicate information about an authentication packet transmitted between the first device and a second device in an authentication process. The first device determines an authentication state between the first device and the second device based on the authentication packet information, where the authentication state is that authentication succeeds or that authentication fails. This improves security of device communication.

FIG. 6

## Description

## TECHNICAL FIELD

This application relates to the field of intelligent driving and intelligent vehicle technologies, and in particular, to an authentication detection method, apparatus, and system.

## BACKGROUND

A vehicle (for example, a car or an airplane) usually includes a plurality of devices, and the plurality of devices may communicate with each other, to implement intelligent control on the vehicle.

Before the two devices communicate with each other, mutual authentication needs to be performed between the two devices. After the authentication succeeds, the two devices may communicate with each other normally. However, in an actual application process, some devices may perform normal communication without authentication or after performing partial authentication, which causes relatively poor security of communication between devices.

## SUMMARY

Embodiments of this application provide an authentication detection method, apparatus, and system. This improves security of device communication.

According to a first aspect, an embodiment of this application provides an authentication detection apparatus. A first device obtains authentication packet information, where the authentication packet information is used to indicate information about an authentication packet transmitted between a first device and a second device in an authentication process. The first device determines an authentication state between the first device and the second device based on the authentication packet information, where the authentication state is that authentication succeeds or that authentication fails.

In the foregoing process, the first device may obtain the authentication packet information between the first device and the second device, and determine the authentication state between the first device and the second device based on the authentication packet information. When the authentication state between the first device and the second device is that authentication fails, communication between the first device and the second device is interfered with, to avoid communication between the first device and the second device when authentication fails, thereby improving security of device communication.

In a possible implementation, the authentication packet information includes at least one piece of the following information:

a quantity of authentication packets received by the first device from the second device;
a quantity of authentication packets sent by the first device to the second device;
first indication information, where the first indication information is used to indicate whether the first device sends an authentication success packet to the second device;
second indication information, where the second indication information is used to indicate whether the first device receives an authentication success packet sent by the second device; or
third indication information, where the third indication information is used to indicate whether an authentication packet is transmitted between the first device and the second device.

In the foregoing process, the authentication packet information may directly or indirectly indicate the authentication state between the first device and the second device, so that the first device can accurately and quickly determine the authentication state between the first device and the second device based on the authentication packet information.

In a possible implementation, when at least one of the following conditions is met, the authentication state is that authentication fails:

A quantity of authentication packets that are sent by the second device and that are received by the first device is less than a first threshold;

a quantity of authentication packets sent by the first device to the second device is less than a second threshold; or
the first device does not send an authentication success packet to the second device, and the first device does not receive an authentication success packet sent by the second device.

In a process in which authentication is performed on the first device and the second device, if the first device and the second device successfully authenticate each other, a quantity of authentication packets sent between the first device and the second device needs to meet a specified threshold. Therefore, based on the foregoing conditions, it can be accurately determined that the authentication state between the first device and the second device is that authentication fails.

In a possible implementation, when the following conditions are met, the authentication state is that authentication succeeds:

The first device sends an authentication success packet to the second device; and
the first device receives an authentication success packet sent by the second device.

In a process in which authentication is performed on the first device and the second device, if the first device and the second device successfully authenticate each other, an authentication success packet may be sent by the first device and the second device to each other. Therefore, when it is determined that an authentication success packet is sent by the first device and the second device to each other, it can be determined that the authentication state between the first device and the second device is that authentication succeeds.

In a possible implementation, that the authentication state between the first device and the second device is determined based on the authentication packet information includes: When a first condition is met, the authentication state between the first device and the second device is determined based on the authentication packet information.

In the foregoing process, the authentication state between the first device and the second device is determined only when the first condition is met. This avoids determining the authentication state between the first device and the second device without necessity.

In a possible implementation, the first condition includes at least one of the following conditions:

The first device does not perform detection on the authentication state between the first device and the second device;
the first device detects that the authentication state between the first device and the second device is that authentication fails; or
the first device determines that the first device and the second device are devices on which authentication state detection is to be performed.

When at least one of the foregoing conditions is met, it indicates that the first device cannot determine whether the authentication state between the first device and the second device is that authentication succeeds or that authentication fails. Therefore, the authentication state between the first device and the second device needs to be determined, to prevent the first device from performing an unnecessary operation.

In a possible implementation, the first device may determine, in the following manner, that the first device and the second device are devices on which authentication is to be performed: The first device obtains a packet transmitted between the first device and the second device, and determines, based on attribute information of the packet, that the first device and the second device are devices on which authentication state detection is to be performed, where the attribute information includes at least one piece of the following information: an identifier of the packet, a format of the packet, and a field included in the packet.

The attribute information of the packet transmitted between the first device and the second device may reflect whether the first device and the second device perform authentication. Therefore, whether the first device and the second device are devices on which authentication state detection is to be performed can be accurately determined by using the attribute information of the packet.

In a possible implementation, the packet is a controller area network CAN packet or a CAN-with-flexible-data-rate packet.

In a possible implementation, when the first device and the second device communicate with each other through Ethernet, the authentication packet information may be obtained in the following manner: Traffic of a preset port is monitored, to obtain the authentication packet information, and packets transmitted between the first device and the second device pass through the preset port.

Because all packets transmitted between the first device and the second device pass through the preset port, the authentication packet information can be accurately obtained by performing traffic monitoring on the preset port.

In a possible implementation, when the first device and the second device communicate with each other through a CAN, the authentication packet information may be obtained in the following manner: An identifier of a CAN packet transmitted between the first device and the second device is obtained, and the authentication packet information is obtained based on the identifier of the CAN packet.

The identifier of the CAN packet transmitted between the first device and the second device may indicate a type of the CAN packet. Therefore, based on the identifier of the CAN packet, the authentication packet information can be accurately obtained.

In a possible implementation, the first device may obtain the authentication packet information in the following manner: The first device collects statistics on authentication packets transmitted between the first device and the second device, to obtain the authentication packet information.

Statistics on the authentication packet transmitted between the first device and the second device are collected. In this way, the authentication packet information can be accurately obtained.

In a possible implementation, the first device is a device in a transportation means, and/or the second device is a device in a transportation means.

In a possible implementation, the first device is an in-vehicle device, and/or the second device is an in-vehicle device.

In a possible implementation, when the first device determines that the authentication state between the first device and the second device is that authentication fails, the first device performs a first preset operation, where the first preset operation includes at least one of the following operations:

recording the authentication state as that authentication fails;
suspending sending a packet to the second device;
discarding a received packet sent by the second device; or

triggering authentication with the second device.

In the foregoing process, when the authentication state between the first device and the second device is that authentication fails, the first device performs the first preset operation, so that security of communication between the first device and the second device can be improved.

In a possible implementation, the first device obtains an identifier of a first packet received from the second device, and the first device performs sequence detection on the first packet based on the identifier of the first packet to obtain a sequence detection result, where the sequence detection result is used to indicate that a sequence of the first packet is normal or abnormal.

In the foregoing process, the first device may perform sequence detection on the received packets, so that a communication risk caused by an abnormal sequence can be avoided.

According to a second aspect, an embodiment of this application provides an authentication detection method. A third device obtains authentication packet information, where the authentication packet information is used to indicate information about an authentication packet transmitted between a first device and a second device in an authentication process. The third device determines an authentication state between the first device and the second device based on the authentication packet information, where the authentication state is that authentication succeeds or that authentication fails.

In the foregoing process, the third device may obtain the authentication packet information between the first device and the second device, and determine the authentication state between the first device and the second device based on the authentication packet information. When the authentication state between the first device and the second device is that authentication fails, the third device interferes with communication between the first device and the second device, to avoid communication between the first device and the second device when authentication fails, thereby improving security of device communication.

In a possible implementation, the authentication packet information includes at least one piece of the following information:

a quantity of authentication packets that are sent by the second device and that are received by the first device;
a quantity of authentication packets sent by the first device to the second device;
first indication information, where the first indication information is used to indicate whether the first device sends an authentication success packet to the second device;
second indication information, where the second indication information is used to indicate whether the first device receives an authentication success pack-

et sent by the second device; or
third indication information, where the third indication information is used to indicate whether an authentication packet is transmitted between the first device and the second device.

In the foregoing process, the authentication packet information may directly or indirectly indicate the authentication state between the first device and the second device, so that the third device can accurately and quickly determine the authentication state between the first device and the second device based on the authentication packet information.

In a possible implementation, when at least one of the following conditions is met, the authentication state is that authentication fails:

A quantity of authentication packets that are sent by the second device and that are received by the first device is less than a first threshold;

a quantity of authentication packets sent by the first device to the second device is less than a second threshold; or
the first device does not send an authentication success packet to the second device, and the first device does not receive an authentication success packet sent by the second device.

In a process in which authentication is performed on the first device and the second device, if the first device and the second device successfully authenticate each other, a quantity of authentication packets sent between the first device and the second device needs to meet a specified threshold. Therefore, based on the foregoing conditions, it can be accurately determined that the authentication state between the first device and the second device is that authentication fails.

In a possible implementation, when the following conditions are met, the authentication state is that authentication succeeds:

The first device sends an authentication success packet to the second device; and
the first device receives an authentication success packet sent by the second device.

In a process in which authentication is performed on the first device and the second device, if the first device and the second device successfully authenticate each other, an authentication success packet may be sent by the first device and the second device to each other. Therefore, when it is determined that an authentication success packet is sent by the first device and the second device to each other, it can be determined that the authentication state between the first device and the second device is that authentication succeeds.

In a possible implementation, that the authentication state between the first device and the second device is determined based on the authentication packet information includes:

When a first condition is met, the authentication state between the first device and the second device is determined based on the authentication packet information.

In the foregoing process, the authentication state between the first device and the second device is determined only when the first condition is met. This avoids determining the authentication state between the first device and the second device without necessity.

In a possible implementation, the first condition includes at least one of the following conditions:

The third device does not perform detection on the authentication state between the first device and the second device;

the third device detects that the authentication state between the first device and the second device is that authentication fails; or

the third device determines that the first device and the second device are devices on which authentication state detection is to be performed.

When at least one of the foregoing conditions is met, it indicates that the first device cannot determine whether the authentication state between the first device and the second device is that authentication succeeds or that authentication fails. Therefore, the authentication state between the first device and the second device needs to be determined, to prevent the first device from performing an unnecessary operation.

In a possible implementation, the third device obtains an identifier of a first packet, where the first packet is a packet sent by the second device to the first device. The third device performs, based on the identifier of the first packet, sequence detection on the first packet, to obtain a sequence detection result, where the sequence detection result is used to indicate that a sequence of the first packet is normal or abnormal.

In the foregoing process, the third device may perform sequence detection on the received packets, so that a communication risk caused by an abnormal sequence can be avoided.

According to a third aspect, an embodiment of this application provides an authentication detection apparatus including a first obtaining module and a determining module.

The first obtaining module is configured to obtain authentication packet information, where the authentication packet information is used to indicate information about an authentication packet transmitted by a first device and a second device in an authentication process.

The determining module is configured to: determine an authentication state between the first device and the second device based on the authentication packet information, where the authentication state is that authentication succeeds or that authentication fails.

In a possible implementation, the authentication packet information includes at least one piece of the following information:

a quantity of authentication packets received by the first device from the second device;

a quantity of authentication packets sent by the first device to the second device;

first indication information, where the first indication information is used to indicate whether the first device sends an authentication success packet to the second device;

second indication information, where the second indication information is used to indicate whether the first device receives an authentication success packet sent by the second device; or

third indication information, where the third indication information is used to indicate whether an authentication packet is transmitted between the first device and the second device.

In a possible implementation, when at least one of the following conditions is met, the authentication state is that authentication fails:

A quantity of authentication packets that are sent by the second device and that are received by the first device is less than a first threshold;

a quantity of authentication packets sent by the first device to the second device is less than a second threshold; or

the first device does not send an authentication success packet to the second device, and the first device does not receive an authentication success packet sent by the second device.

In a possible implementation, when the following conditions are met, the authentication state is that authentication succeeds:

The first device sends the authentication success packet to the second device; and

the first device receives the authentication success packet sent by the second device.

In a possible implementation, the determining module is specifically configured to:

when a first condition is met, determine the authentication state between the first device and the second device based on the authentication packet information.

In a possible implementation, the first condition includes at least one of the following conditions:

The first device does not perform detection on the authentication state between the first device and the second device;

the first device detects that the authentication state between the first device and the second device is that authentication fails; or

the first device determines that the first device and the second device are devices on which authentication state detection is to be performed.

In a possible implementation, the determining module is specifically configured to:

obtain a packet transmitted between the first device and the second device; and
determine, based on attribute information of the packet, that the first device and the second device are devices on which authentication state detection is to be performed, where the attribute information includes at least one piece of the following information: an identifier of the packet, a format of the packet, or a field included in the packet.

In a possible implementation, the packet is a controller area network CAN packet or a CAN-with-flexible-data-rate packet.

In a possible implementation, the first device and the second device communicate with each other through Ethernet, and the first obtaining module is specifically configured to:
monitor traffic of a preset port to obtain the authentication packet information, where packets transmitted between the first device and the second device pass through the preset port.

In a possible implementation, the first device and the second device communicate with each other through a CAN, and the first obtaining module is specifically configured to:

obtain a CAN packet transmitted between the first device and the second device; and
obtain the authentication packet information based on an identifier of the CAN packet.

In a possible implementation, the first obtaining module is specifically configured to:
collect statistics about authentication packets transmitted between the first device and the second device, to obtain the authentication packet information.

In a possible implementation, the first device is a device in a transportation means, and/or the second device is a device in a transportation means.

In a possible implementation, the first device is an in-vehicle device and/or the second device is an in-vehicle device.

In a possible implementation, the apparatus further includes an execution module.

The execution module is configured to: when the determining module determines that the authentication state between the first device and the second device is that authentication fails, perform a first preset operation, where the first preset operation includes at least one of the following operations:

recording the authentication state as that authentication fails;
suspending sending a packet to the second device;
discarding a received packet sent by the second device; or

triggering authentication with the second device.

In a possible implementation, the apparatus further includes a second obtaining module and a detection module.

The second obtaining module is configured to obtain an identifier of a first packet received from the second device.

The detection module is configured to: perform sequence detection on the first packet based on the identifier of the first packet, to obtain a sequence detection result, where the sequence detection result is used to indicate that a sequence of the first packet is normal or abnormal.

According to a fourth aspect, an embodiment of this application provides an authentication detection apparatus including a first obtaining module and a determining module.

The first obtaining module is configured to obtain authentication packet information, where the authentication packet information is used to indicate information about an authentication packet transmitted by a first device and a second device in an authentication process.

The determining module is configured to: determine an authentication state between the first device and the second device based on the authentication packet information, where the authentication state is that authentication succeeds or that authentication fails.

In a possible implementation, the authentication packet information includes at least one piece of the following information:

a quantity of authentication packets that are sent by the second device and that are received by the first device;
a quantity of authentication packets sent by the first device to the second device;
first indication information, where the first indication information is used to indicate whether the first device sends an authentication success packet to the second device;
second indication information, where the second indication information is used to indicate whether the first device receives an authentication success packet sent by the second device; or
third indication information, where the third indication information is used to indicate whether an authentication packet is transmitted between the first device and the second device.

In a possible implementation, when at least one of the following conditions is met, the authentication state is that authentication fails:

A quantity of authentication packets that are sent by the second device and that are received by the first device is less than a first threshold;
a quantity of authentication packets sent by the first device to the second device is less than a second threshold; or
the first device does not send an authentication success packet to the second device, and the first device does not receive an authentication success packet sent by the second device.

In a possible implementation, when the following conditions are met, the authentication state is that authentication succeeds:
The first device sends the authentication success packet to the second device; and
the first device receives the authentication success packet sent by the second device.

In a possible implementation, the determining module is specifically configured to:
when a first condition is met, determine the authentication state between the first device and the second device based on the authentication packet information.

In a possible implementation, the first condition includes at least one piece of the following conditions:

A third device does not perform detection on the authentication state between the first device and the second device;
a third device detects that the authentication state between the first device and the second device is that authentication fails; or
a third device determines that the first device and the second device are devices on which authentication state detection is to be performed.

In a possible implementation, the apparatus further includes a second obtaining module and a detection module.

The second obtaining module is configured to obtain an identifier of a first packet, where the first packet is a packet sent by the second device to the first device.

The detection module is configured to: perform sequence detection on the first packet based on the identifier of the first packet, to obtain a sequence detection result, where the sequence detection result is used to indicate that a sequence of the first packet is normal or abnormal.

According to a fifth aspect, an embodiment of this application provides an authentication detection apparatus. The authentication detection apparatus includes a memory and a processor. The memory stores computer program instructions, and the processor runs the computer program instructions to perform the method according to any one of the implementations of the first aspect.

According to a sixth aspect, an embodiment of this application provides an authentication detection apparatus. The authentication detection apparatus includes a memory and a processor, the memory stores computer program instructions, and the processor runs the computer program instructions to perform the method according to any one of the implementations of the second aspect.

According to a seventh aspect, an embodiment of this application provides a computer storage medium, including computer instructions. When the computer instructions are run by a processor, the method according to any one of the implementations of the first aspect is implemented.

According to an eighth aspect, an embodiment of this application provides a computer storage medium, including computer instructions. When the computer instructions are run by a processor, the method according to any one of the implementations of the second aspect is implemented.

According to a ninth aspect, an embodiment of this application provides a computer program product. When the computer program product runs on a processor, the method according to any one of the implementations of the first aspect is implemented.

According to a tenth aspect, an embodiment of this application provides a computer program product. When the computer program product runs on a processor, the method according to any one of the implementations of the second aspect is implemented.

According to an eleventh aspect, an embodiment of this application provides an authentication detection system. The authentication detection system includes a first device and a second device. The first device is configured to perform the authentication detection method according to any one of the implementations of the first aspect. The first device is the authentication detection apparatus according to any one of the implementations of the third aspect or the fifth aspect.

According to a twelfth aspect, an embodiment of this application provides an authentication detection system. The authentication detection system includes a first device, a second device, and a third device. The third device is configured to perform the authentication detection method according to any one of the implementations of the second aspect, and the third device is the authentication detection apparatus according to any one of the implementations of the fourth aspect or the sixth aspect.

According to a thirteenth aspect, an embodiment of this application provides an authentication detection apparatus, including an input interface and a logic circuit.

The input interface is configured to obtain authentication packet information, where the authentication packet information is used to indicate information about an authentication packet transmitted by a first device and a second device in an authentication process.

The logic circuit is configured to: determine an authentication state between the first device and the second device based on the authentication packet information, where the authentication state is that authentication succeeds or that authentication fails.

In a possible implementation, the input interface is configured to perform steps that are in the first aspect and that are related to an obtaining action, and the input interface is configured to perform steps corresponding to the first obtaining module and the second obtaining module in the third aspect.

In a possible implementation, the logic circuit is configured to perform steps that are in the first aspect and that are related to a processing action, and the logic circuit is configured to perform steps corresponding to the determining module, the execution module, and the detection module in the third aspect.

In a possible implementation, the input interface is configured to perform steps that are in the second aspect and that are related to an obtaining action, and the input interface is configured to perform steps corresponding to the first obtaining module and the second obtaining module in the fourth aspect.

In a possible implementation, the logic circuit is configured to perform steps that are in the second aspect and that are related to a processing action, and the logic circuit is configured to perform steps corresponding to the determining module and the detection module in the fourth aspect.

By using the authentication detection method, apparatus, and system that are provided by embodiments of this application, authentication packet information between a first device and a second device is obtained, and an authentication state between the first device and the second device is determined based on the authentication packet information. When the authentication state between the first device and the second device is that authentication fails, communication between the first device and the second device is interfered with, to avoid communication between the first device and the second device when authentication fails, thereby improving security of device communication.

**BRIEF DESCRIPTION OF DRAWINGS**

FIG. 1 is a schematic diagram of a structure of a vehicle according to an embodiment of this application;
FIG. 2A is an architectural diagram of a vehicle according to an embodiment of this application;
FIG. 2B is another architectural diagram of a structure of a vehicle according to an embodiment of this application;
FIG. 3 is a schematic flowchart of an authentication method according to an embodiment of this application;
FIG. 4 is a schematic flowchart of another authentication method according to an embodiment of this application;
FIG. 5A is a schematic diagram of authentication state detection according to an embodiment of this application;
FIG. 5B is another schematic diagram of authentication state detection according to an embodiment of this application;
FIG. 6 is a schematic flowchart of an authentication detection method according to an embodiment of this application;
FIG. 7 is a schematic flowchart of another authentication detection method according to an embodiment of this application;
FIG. 8 is a schematic diagram of a structure of an authentication detection apparatus according to an embodiment of this application;
FIG. 9 is a schematic diagram of a structure of another authentication detection apparatus according to an embodiment of this application;
FIG. 10 is a schematic diagram of a structure of still another authentication detection apparatus according to an embodiment of this application;
FIG. 11 is a schematic diagram of a structure of yet another authentication detection apparatus according to an embodiment of this application;
FIG. 12 is a schematic diagram of a hardware structure of an authentication detection apparatus according to an embodiment of this application;
FIG. 13 is a schematic diagram of a hardware structure of another authentication detection apparatus according to an embodiment of this application;
FIG. 14 is a schematic diagram of a structure of yet another authentication detection apparatus according to an embodiment of this application;
FIG. 15 is a schematic diagram of a structure of an authentication detection system according to an embodiment of this application; and
FIG. 16 is a schematic diagram of a structure of another authentication detection system according to an embodiment of this application.

**DESCRIPTION OF EMBODIMENTS**

The technical solutions in embodiments of this application may be applied to a vehicle or an electronic apparatus (for example, a chip or a head unit) applied to a vehicle. The vehicle transportation means may include a car, a ship, an airplane, or the like. The vehicle may include a private car, a bus, a cargo van, a passenger vehicle, and the like. For ease of description, an example in which the vehicle is a car is used below for description.

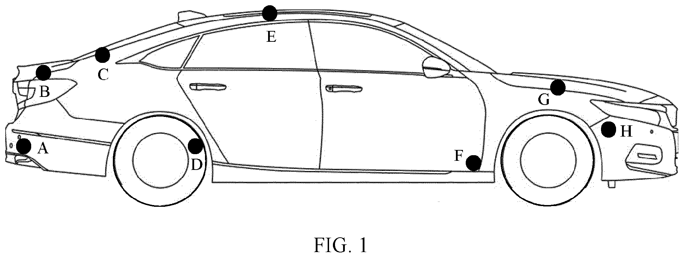

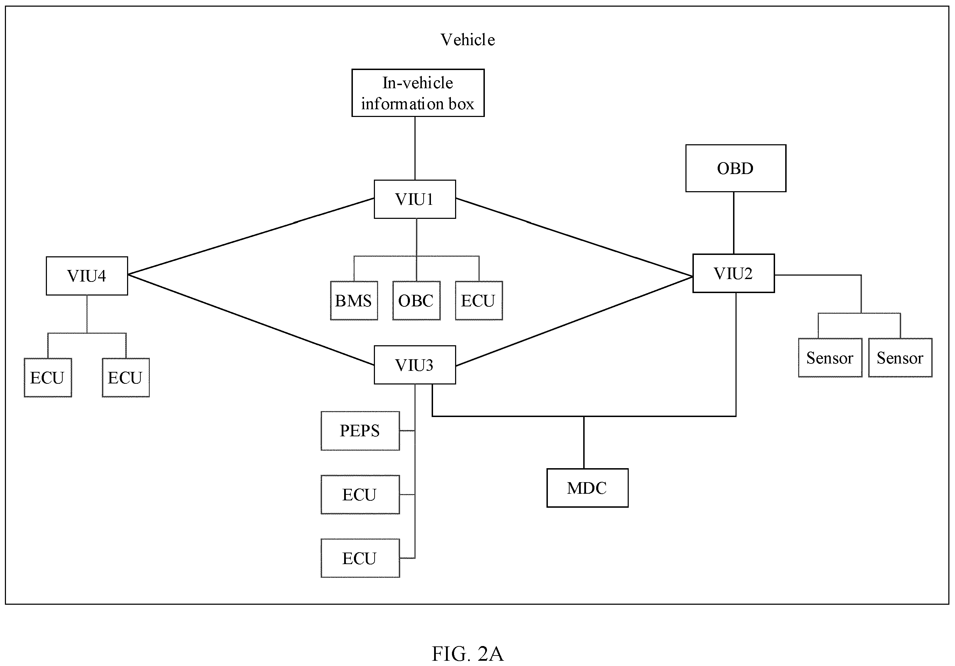

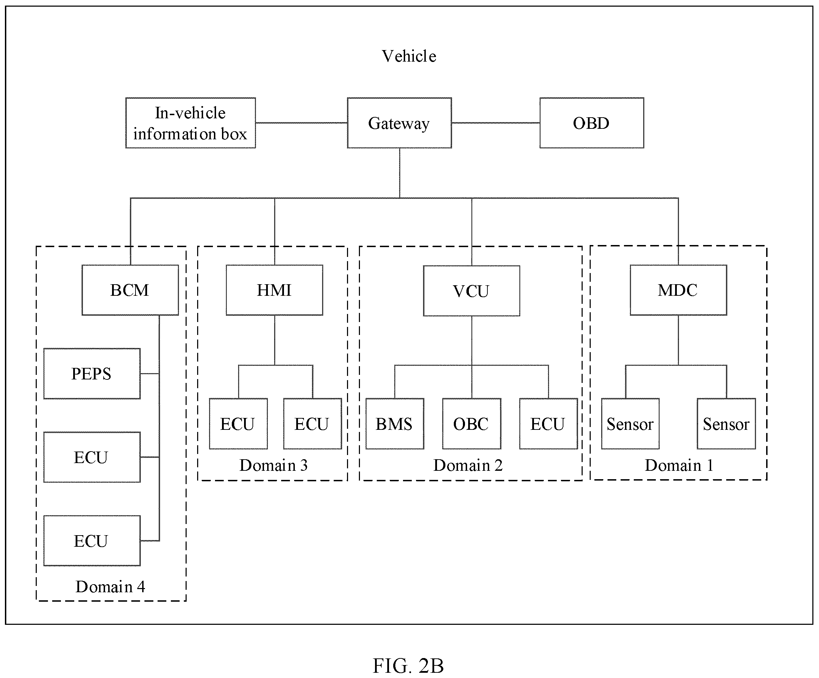

The vehicle may include a plurality of devices, and the devices included in the vehicle may also be referred to as components or in-vehicle devices. For ease of understanding, the following describes a structure of a vehicle with reference to FIG. 1, FIG. 2A, and FIG. 2B.

FIG. 1 is a schematic diagram of a structure of a vehicle according to an embodiment of this application. Refer to FIG. 1. A plurality of devices may be disposed in the vehicle. For example, the plurality of devices may include a device A to a device H shown in FIG. 1. The plurality of devices may be disposed inside the vehicle, or may be disposed outside the vehicle. In the plurality of devices, some devices may communicate with each other.

FIG. 2A is an architectural diagram of a vehicle according to an embodiment of this application. The vehicle architecture shown in FIG. 2A may also be referred to as a central computing architecture (central computing architecture, CCA). Refer to FIG. 2A. A plurality of devices in the vehicle may include a plurality of vehicle integration units (vehicle integrated/integration unit, VIU). In FIG. 2A, an example in which there are four VIUs is used for description, and the four VIUs may be denoted as a VIU1, a VIU2, a VIU3, and a VIU4. The VIU has a gateway function.

The four VIUs may form a ring network, so that any two VIUs in the four VIUs can communicate with each other. Different VIUs may have a communication connection to different devices in the vehicle. For example, the VIU 1 may be separately connected to devices such as an in-vehicle information box, a battery management system (battery manage system, BMS), on-board charge (on-board charge, OBC), and an electronic control unit (electronic control unit, ECU). The VIU 2 may be separately connected to devices such as a plurality of sensors, an on-board automatic diagnosis (on-board diagnostics, OBD) system, and a mobile data center (mobile data center, MDC). The VIU3 may be connected to devices such as passive entry passive start (passive entry passive start, PEPS), an ECU, and an MDC. The VIU4 may be connected to a plurality of ECUs.

It should be noted that FIG. 2A merely shows a quantity of VIUs and devices included in the vehicle as an example, and does not limit the quantity of VIUs and the devices included in the vehicle.

FIG. 2B is another architectural diagram of a structure of a vehicle according to an embodiment of this application. The vehicle architecture shown in FIG. 2B may also be referred to as an electric and electronic (electric and electronic, E/E) frame. Refer to FIG. 2B. Devices in the vehicle may be divided into several domains, each domain includes one or more devices, and the one or more devices in each domain include one management device. The management device may also be referred to as a domain controller. The vehicle further includes a gateway, an in-vehicle information box, and an OBD. The gateway is separately connected to the in-vehicle information box, the OBD, and each domain controller. The domain controller can communicate with devices such as an in-vehicle information box and an OBD through a network element. Devices in the domain can communicate with devices such as a gateway through the domain controller.

Refer to FIG. 2B. An example in which devices in the vehicle are divided into four domains is used for description. The four domains may be respectively denoted as a domain 1, a domain 2, a domain 3, and a domain 4. The domain 1 may include a mobile data center (mobile data center, MDC), at least one sensor (sensor), a global positioning system (global positioning system, GPS), and the like. The MDC is a domain controller in the domain 1. The domain 2 includes a vehicle control unit (vehicle control unit, VCU), at least one ECU, wireless energy transmission (wireless power transmission, WPT), and the like. The VCU is a domain controller in the domain 2. The domain 3 may include a man-machine interface (human machine interface, HMI), at least one ECU, and the like. The HMI is a domain controller in the domain 3. The domain 4 may include a vehicle body control module (body control module, BCM), at least one ECU, a PEPS, and the like. The BCM is a domain controller in the domain 4.

It should be noted that FIG. 2B merely shows a quantity of domains and devices included in each domain as an example, and does not limit the quantity of domains and the devices included in each domain.

Development of vehicle intelligence (for example, self-driving and artificial intelligence) comes with more complex communication between devices in a vehicle, and communication security is increasingly important. To ensure security of communication between devices, before two devices communicate with each other, the two devices first perform mutual authentication, and after the authentication succeeds, the two devices communicate with each other. Optionally, in one running process of the vehicle (between starting of the vehicle and shutting down of the vehicle), authentication may be performed once between two devices in the vehicle. For example, authentication may be performed between two devices in the vehicle after the vehicle is started, or authentication may be performed between two devices in the vehicle after the vehicle is shut down and before the two devices communicate with each other. It should be noted that the two devices may be in a same vehicle, or may be in different vehicles.

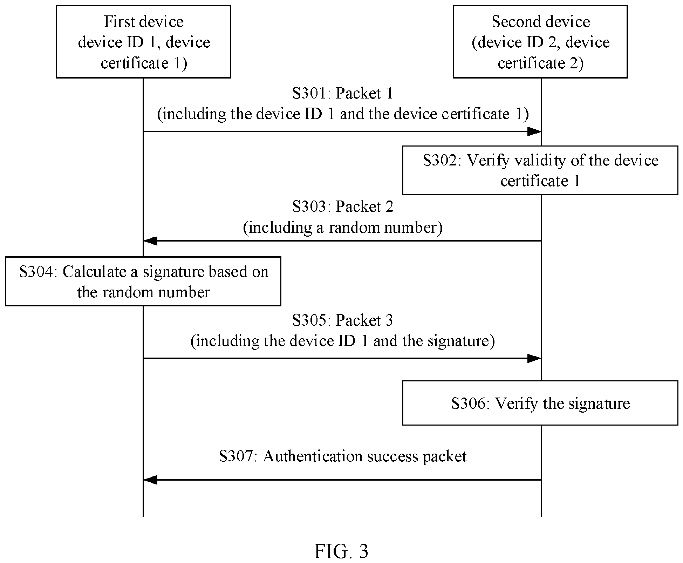

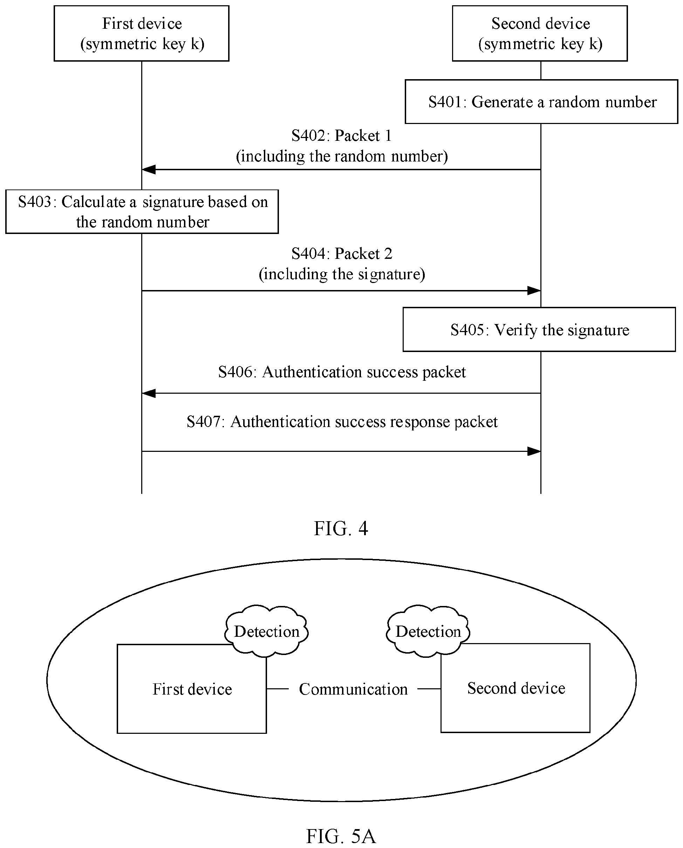

The following describes two possible authentication manners with reference to FIG. 3 and FIG. 4.

FIG. 3 is a schematic flowchart of an authentication method according to an embodiment of this application. Refer to FIG. 3. The authentication method may include the following steps.

S301: A first device sends packet 1 to a second device.

The packet 1 includes a device identifier of the first device (device ID 1 for short) and a device certificate of the first device (device certificate 1 for short).

The first device and the second device may be any two devices in a vehicle.

It should be noted that, in this embodiment of this application, if the first device sends data to the second device, it may be considered by default that the second device receives the data from the first device. For brevity of description, that the second device receives the data from the first device is not described in this embodiment of this application. Similarly, if the second device sends data to the first device, it may be considered by default that the first device receives the data from the second device. For brevity of description, that the first device receives the data from the second device is not described in this embodiment of this application.

S302: The second device verifies validity of the device certificate (device certificate 1) of the first device.

If the second device verifies that the device certificate of the first device is valid, S303 to S307 are performed.

If the second device verifies that the device certificate of the first device is invalid, the authentication fails. For example, the second device may send an authentication failure packet to the first device, where the authentication failure packet is used to indicate that the second device fails to authenticate the first device.

S303: The second device sends a packet 2 to the first device.

The packet 2 includes a random number generated by the second device.

S304: The first device calculates a signature based on the random number.

For example, assuming that the random number is r, and the first device and the second device pre-agree on data data1, the signature sig may be determined based on the following formula:

$$sig=\{Sig(r), Sig(r, data1)\}.$$

S305: The first device sends a packet 3 to the second device.

The packet 3 includes the identifier of the first device (device ID 1) and the signature.

S306: The second device verifies the signature.

Optionally, the second device may verify the received signature based on the random number and data1.

For example, the second device may obtain a signature through random number calculation (for a calculation process, refer to S304), and compare the calculated signature with the signature in the packet 3. If the two signatures are the same, verification on the signature in the packet 3 succeeds; otherwise, verification on the signature in the packet 3 fails.

After the second device successfully verifies the signature, S307 is performed.

If the second device fails to verify the signature, the second device may send an authentication failure packet to the first device, where the authentication failure packet is used to indicate that the second device fails to authenticate the first device.

S307: The second device sends an authentication success packet to the first device.

The authentication success packet is used to indicate that the second device successfully authenticates the first device.

The authentication manner shown in FIG. 3 is a certificate-based unidirectional authentication manner. According to the method shown in FIG. 3, the second device may complete authentication on the first device.

FIG. 4 is a flowchart of another authentication method according to an embodiment of this application. Refer to FIG. 4. The authentication method may include the following steps.

S401: A second device generates a random number.

S402: The second device sends a packet 1 to a first device.

The packet 1 includes the random number.

S403: The first device calculates a signature based on the random number.

For example, it is assumed that a signature S may be S=AES-CMAC(CANID11rand, k), where rank is the random number, CANID is an ID of a CAN packet sent by the first device to the second device, k is a symmetric key stored by the first device and the second device, and AES is known to the first device and the second device.

S404: The first device sends a packet 2 to the second device.

The packet 2 includes the signature.

S405: The second device verifies the signature.

Optionally, the second device may calculate a signature based on the formula shown in S403, and verify whether the calculated signature is the same as the received signature. If the calculated signature is the same as the received signature, the verification succeeds, and S406 is performed.

S406: The second device sends an authentication success packet to the first device.

S407: The first device sends an authentication success response packet to the second device.

The authentication manner shown in FIG. 4 is a challenge-response-based unidirectional symmetric authentication manner According to the method shown in FIG. 4, the second device may complete authentication on the first device.

It should be noted that the first device and the second device in the embodiments shown in FIG. 3 and FIG. 4 may be in-vehicle devices, or may be chips disposed in the in-vehicle devices. When the first device and the second device are chips, the receiving and sending functions in the embodiments in FIG. 3 and FIG. 4 may be implemented by a chip by using an interface circuit. For example, the chip performs receiving and sending in a Bluetooth communication manner by using the interface circuit.

It should be noted that FIG. 3 and FIG. 4 merely show two feasible authentication manners by using examples, and do not limit the authentication manner. Certainly, the device in the vehicle may alternatively use another authentication manner. This is not limited in this embodiment of this application.

In a related technology, some devices in a vehicle may perform communication without authentication or after performing partial authentication. Consequently, security of communication between devices is relatively poor. For example, in an attack scenario, an attacked device in a vehicle may communicate with another device without authentication or after performing partial authentication.

To resolve the foregoing problem of relatively poor device security, an embodiment of this application provides an authentication detection method. For any first device and second device that communicate with each other, authentication packet information between the first device and the second device may be obtained, and an authentication state between the first device and the second device is determined based on the authentication packet information. When the authentication state between the first device and the second device is that authentication fails, communication between the first device and the second device is interfered with, to avoid communication between the first device and the second device when authentication fails, thereby improving security of device communication.

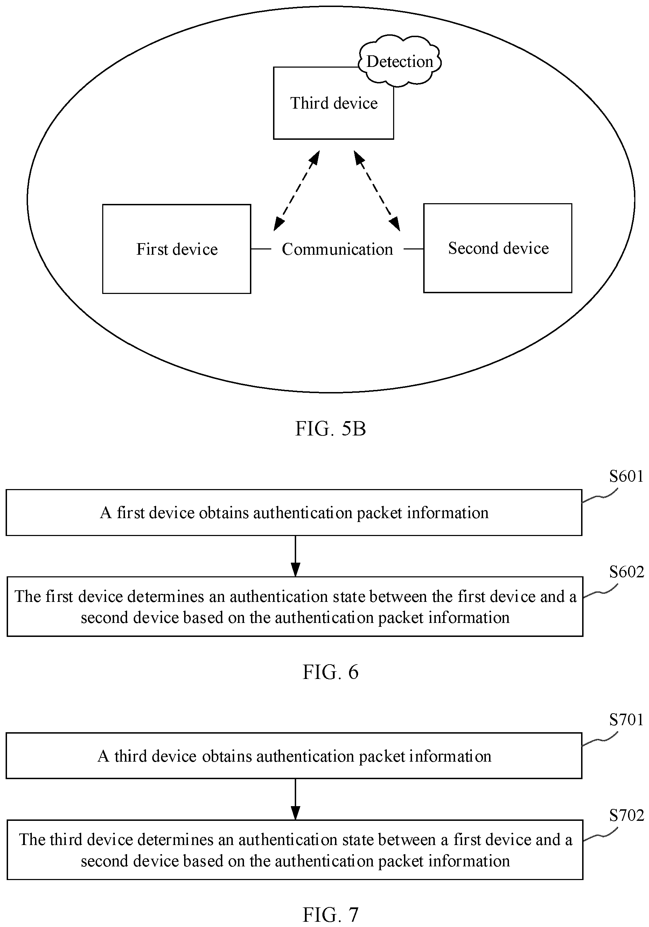

For any first device and second device in a vehicle, the first device or the second device may detect an authentication state between the first device and the second device, or a third device may detect an authentication state between the first device and the second device. The following describes the two manners with reference to FIG. 5A and FIG. 5B.

FIG. 5A is a schematic diagram of authentication state detection according to an embodiment of this application. Refer to FIG. 5A. A vehicle includes a first device and a second device. The first device and the second device may communicate with each other, and the first device and the second device may directly communicate with each other, or may indirectly communicate with each other. For example, refer to FIG. 2. When the first device is a VCU and the second device is an OBC, the first device directly communicates with the second device. When the first device is a VCU and the second device is an in-vehicle information box, the first device indirectly communicates with the second device through a gateway. In FIG. 5A, the first device and/or the second device detect/detects an authentication state between the first device and the second device.

FIG. 5B is another schematic diagram of authentication state detection according to an embodiment of this application. Refer to FIG. 5B. A vehicle includes a first device, a second device, and a third device. The first device and the second device may be devices configured to maintain normal driving of a vehicle. For example, the first device and the second device may be devices shown in FIG. 2A and FIG. 2B. The first device and the second device may communicate with each other, and the first device and the second device may directly communicate with each other, or may indirectly communicate with each other. For example, refer to FIG. 2. When the first device is a VCU and the second device is an OBC, the first device directly communicates with the second device. When the first device is a VCU and the second device is an in-vehicle information box, the first device indirectly communicates with the second device through a gateway. In FIG. 5B, the third device detects an authentication state between the first device and the second device. The third device may monitor a packet transmitted between the first device and the second device. For example, the third device may detect a communication link between the first device and the second device, or the third device may detect a communications port between the first device and the second device. Optionally, in addition to detecting the authentication state between the first device and the second device, the third device may further detect an authentication state between other devices.

Optionally, the third device may be disposed on a gateway. The third device may alternatively be connected to any two devices through a communications link, to monitor a packet transmitted between the any two devices.

For the two manners shown in FIG. 5A and FIG. 5B, the following separately describes the technical solutions shown in this application by using specific embodiments. It should be noted that the following several specific embodiments may exist independently, or may be combined with each other. Same or similar content is not described repeatedly in different embodiments.

With reference to an embodiment shown in FIG. 6, the following describes an authentication detection manner shown in FIG. 5A. In the embodiment shown in FIG. 6, an example in which the first device detects the authentication state between the first device and the second device is used for description.

FIG. 6 is a schematic flowchart of an authentication detection method according to an embodiment of this application. Refer to FIG. 6. The method may include the following steps.

S601: A first device obtains authentication packet information.

The first device may execute the embodiment shown in FIG. 6 in the following manners, to detect an authentication state between the first device and a second device.

Manner 1: The first device periodically detects the authentication state between the first device and the second device.

The first device and the second device are any two devices that can perform communication in a vehicle. For example, the first device and the second device may be any two devices that can perform communication in FIG. 2A and FIG. 2B.

In this manner, after the first device is started, the first device may periodically perform the method shown in the embodiment in FIG. 6 to detect the authentication state between the first device and the second device. After the vehicle is started, the vehicle may supply power to the first device, so that the first device is started.

In this embodiment of this application, the authentication state between the first device and the second device may include the following two cases.

Case 1: When the first device successfully authenticates the second device, and the second device successfully authenticates the first device, it is determined that the authentication state between the first device and the second device is that authentication succeeds. When the first device fails to authenticate the second device, and/or the second device fails to authenticate the first device, it is determined that the authentication state between the first device and the second device is that authentication fails.

Case 2: After the first device successfully authenticates the second device, the first device may determine that the authentication state between the first device and the second device is that authentication succeeds. After the first device fails to authenticate the second device, the first device may determine that the authentication state between the first device and the second device is that authentication fails.

Manner 2: When determining that a first condition is met, the first device detects the authentication state between the first device and the second device.

The first condition being met means that the first device does not determine that authentication between the first device and the second device succeeds. In this case, the authentication between the first device and the second device may succeed, or the authentication may fail. That is, when it cannot be determined that authentication between the first device and the second device succeeds, the authentication state between the first device and the second device is detected. When it is determined that the authentication state between the first device and the second device is that authentication succeeds, the authentication state between the first device and the second device may no longer be detected. In this way, a quantity of authentication state detection times can be reduced, and device power consumption can be reduced.

Optionally, the first condition may include at least one of the following condition 1 to condition 3:

Condition 1: The first device does not detect the authentication state between the first device and the second device.

After the first device is powered on, if the first device does not perform detection on the authentication state between the first device and the second device, the first device does not detect the authentication state between the first device and the second device.

Condition 2: The first device detects that the authentication state between the first device and the second device is that authentication fails.

After the first device is powered on, the first device has detected the authentication state between the first device and the second device at least once, and the detected authentication state between the first device and the second device is that authentication fails.

Condition 3: The first device determines that the first device and the second device are devices on which authentication state detection is to be performed.

Optionally, the first device obtains a packet transmitted between the first device and the second device, and determines, based on attribute information of the packet, that the first device and the second device are devices on which authentication state detection is to be performed, where the attribute information includes at least one piece of the following information: an identifier of the packet, a format of the packet, and a field included in the packet. The packet may be a CAN packet or a CAN-with-flexible-data-rate (CAN with Flexible Data-Rate, CANFD) packet.

For example, if at least one of the identifier, the format, or the field of the packet transmitted between the first device and the second device meets a preset condition, it may be determined that the first device and the second device are devices on which authentication detection is to be performed.

Optionally, in the foregoing two manners, the first device may detect the authentication state between the first device and the second device after determining that the first device performs data communication with the second device. In this way, whether the first device and the second device perform data communication when authentication fails can be efficiently detected.

The authentication packet information is used to indicate information about an authentication packet transmitted by the first device and the second device in an authentication process.

The authentication packet is a packet transmitted by the first device and the second device in the authentication process. For example, refer to FIG. 3. The authentication packet may be a packet 1, a packet 2, a packet 3, or an authentication success packet. Refer to FIG. 4. The authentication packet may be a packet 1, a packet 2, an authentication success packet, or an authentication success response packet.

The authentication packet information includes at least one piece of the following information: a quantity of authentication packets that are sent by the second device and that are received by the first device, a quantity of authentication packets sent by the first device to the second device, first indication information, second indication information, or third indication information. The first indication information is used to indicate whether the first device sends an authentication success packet to the second device. The second indication information is used to indicate whether the first device receives an authentication success packet sent by the second device. The third indication information is used to indicate whether an authentication packet (for example, a CAN authentication packet) is transmitted between the first device and the second device.

Optionally, if the first device sends an authentication success packet to the second device, the first indication information may be 1. Alternatively, if the first device does not send an authentication success packet to the second device, the first indication information may be 0.

Optionally, if the first device receives an authentication success packet sent by the second device, the second indication information may be 1. Alternatively, if the first device does not receive an authentication success packet sent by the second device, the second indication information may be 0.

Optionally, if an authentication packet is transmitted between the first device and the second device (the first device sends an authentication packet to the second device, or the first device receives an authentication packet sent by the second device), the third indication information may be 1. Alternatively, if no CAN authentication packet is transmitted between the first device and the second device, the third indication information may be 0. The first device may determine, based on an identifier (ID) of a packet, whether an authentication packet is transmitted between the first device and the second device. For example, if the identifier of the packet in packets transmitted between the first device and the second device is an identifier of an authentication packet, it may be determined that the authentication packet is transmitted between the first device and the second device. The foregoing packet may be a CAN packet.

In an authentication process, if the first device is a to-be-authenticated device (that is, the second device authenticates the first device), and if the second device successfully authenticates the first device, the second device usually sends an authentication success packet to the first device. For example, refer to FIG. 3 or FIG. 4. In an authentication process shown in FIG. 3 or FIG. 4, the first device is a to-be-authenticated device. After the first device receives the authentication success packet, the first device may send an authentication success response packet to the second device.

The first device and the second device may communicate with each other through Ethernet or CAN. For example, refer to FIG. 2A and FIG. 2B. Ethernet communication is performed between an HMI device and an MDC device, and CAN communication is performed between a VCU device and an OBC device.

A manner of obtaining the authentication packet information by the first device may vary with a communication manner (for example, Ethernet communication or CAN communication) between the first device and the second device. The following separately describes manners of obtaining the authentication packet information by the first device in different communication manners.

Case 1: The first device and the second device communicate with each other through Ethernet.

In this case, the first device may obtain the authentication packet information in the following two manners.

Manner 1: The first device monitors traffic of a preset port to obtain the authentication packet information.

A packet transmitted between the first device and the second device passes through the preset port. For example, a communications port may be 8003. The packet transmitted between the first device and the second device is an Ethernet packet.

In a process in which the first device monitors the traffic of the preset port, the first device may monitor the traffic of the preset port based on content in a packet that passes through the preset port, to obtain the authentication packet information.

Optionally, the Ethernet packet may include a source address and a destination address. The first device may obtain the Ethernet packet that passes through the preset port, obtain the source address and the destination address from the Ethernet packet, and determine, based on the source address and the destination address and from the Ethernet packet that passes through the preset port, a packet (a packet sent by the first device to the second device or a packet sent by the second device to the first device) transmitted between the first device and the second device. The Ethernet packet may further include a packet type. For example, the packet type may be an authentication packet, a data packet, or the like. After the first device determines the packet transmitted between the first device and the second device is obtained, the first device may determine, based on the packet type, the authentication packet transmitted between the first device and the second device.

In the foregoing manner, the first device may determine, from the packet that passes through the preset port, the authentication packet transmitted between the first device and the second device, and collect statistics on the authentication packet transmitted between the first device and the second device, to obtain the authentication packet information.

Manner 2: The first device collects statistics on the authentication packet transmitted between the first device and the second device, to obtain the authentication packet information.

In an actual application process, the first device and the second device may perform authentication for a plurality of times. For example, after one authentication fails, authentication may be performed again. In each authentication process, the first device collects statistics on an authentication packet sent to the second device, and collects statistics on a received authentication packet sent by the second device, to obtain the authentication packet information.

For example, each time authentication starts, the first device sets a quantity of authentication packets (hereinafter referred to as a first quantity) sent to the second device to 0, sets a quantity of received authentication packets (hereinafter referred to as a second quantity) sent by the second device to 0, sets the first indication information to 0, and sets the second indication information to 0. Each time the first device sends an authentication packet to the second device, the first device increases the first quantity by 1. Each time the first device receives an authentication packet sent by the second device, the first device increases the second quantity by 1. If the first device sends an authentication success packet to the second device, the first device sets the first indication information to 1. If the first device receives an authentication success packet sent by the second device, the first device sets the second indication information to 0.

Case 2: The first device communicates with the second device through a CAN.

In this case, the first device may obtain the authentication packet information in the following two manners.

Manner 1: An identifier of a CAN packet transmitted between the first device and the second device is obtained, and the authentication packet information is obtained based on the identifier of the CAN packet.

The identifier of the CAN packet may indicate that a type of the CAN packet is an authentication packet or a data packet. The first device may determine, based on the identifier of the CAN packet, the authentication packet in CAN packets transmitted between the first device and the second device, and collect statistics on the authentication packet transmitted between the first device and the second device, to determine the authentication packet information.

Manner 2: The first device collects statistics on the authentication packet transmitted between the first device and the second device, to obtain the authentication packet information.

It should be noted that for this authentication manner, reference may be made to manner 2 in the first case, and details are not described herein again.

S602: The first device determines the authentication state between the first device and the second device based on the authentication packet information.

The authentication state is that authentication succeeds or that authentication fails.

Optionally, when at least one of the following conditions is met, it may be determined that the authentication state between the first device and the second device is that authentication fails.

Condition 1: A quantity of authentication packets that are sent by the second device and that are received by the first device is less than a first threshold.

A value of the first threshold is related to the authentication manner. For example, if the authentication manner is the authentication manner shown in FIG. 3, the first threshold is 3. If the authentication manner is the authentication manner shown in FIG. 4, the first threshold is 3. Certainly, when the authentication manner is another authentication manner, the first threshold may be another value.

If the quantity of authentication packets that are sent by the second device and that are received by the first device is 0, it indicates that authentication is not performed between the first device and the second device, and it may be determined that the authentication state between the first device and the second device is that authentication fails. If the quantity of authentication packets that are sent by the second device and that are received by the first device is greater than 0 and less than the first threshold, it indicates that complete authentication is not performed between the first device and the second device (partial authentication is performed), and it may be determined that the authentication state between the first device and the second device is that authentication fails.

If the authentication state between the first device and the second device is the case 1 in S601, for any one of a process in which the first device authenticates the second device and a process in which the second device authenticates the first device, if the quantity of the authentication packets that are sent by the second device and that are received by the first device is less than the first threshold, it may be determined that the condition 1 is met.

Condition 2: A quantity of authentication packets sent by the first device to the second device is less than a second threshold.

A value of the second threshold is related to the authentication manner. For example, if the authentication manner is the authentication manner shown in FIG. 3, the second threshold is 2. If the authentication manner is the authentication manner shown in FIG. 4, the first threshold is 2. Certainly, when the authentication manner is another authentication manner, the second threshold may be another value.

If the quantity of authentication packets sent by the first device to the second device is 0, it indicates that authentication is not performed between the first device and the second device, and it may be determined that the authentication state between the first device and the second device is that authentication fails. If the quantity of authentication packets sent by the first device to the second device is greater than 0 and less than the second threshold, it indicates that complete authentication is not performed between the first device and the second device (partial authentication is performed), and it may be determined that the authentication state between the first device and the second device is that authentication fails.

If the authentication state between the first device and the second device is the case 1 in S601, for any one of a process in which the first device authenticates the second device and a process in which the second device authenticates the first device, if the quantity of the authentication packets sent by the first device to the second device is less than the second threshold, it may be determined that the condition 2 is met.

Condition 3: The first device does not send an authentication success packet to the second device, and the first device does not receive an authentication success packet sent by the second device.

That the first device does not send an authentication success packet to the second device may be determined based on the first indication information. For example, if a value of the first indication information is a preset value (for example, 0), it may be determined that the first device does not send an authentication success packet to the second device.

That the first device does not receive an authentication success packet sent by the second device may be determined based on the second indication information. For example, if a value of the second indication information is a preset value (for example, 0), it may be determined that the first device does not receive an authentication success packet sent by the second device.

If the authentication between the first device and the second device succeeds, the first device may send an authentication success packet to the second device, or the first device may receive an authentication success packet sent by the second device. If the first device does not send an authentication success packet to the second device, and the first device does not receive an authentication success packet sent by the second device, it can be determined that the authentication state between the first device and the second device is that authentication fails.

When any one or more of the condition 1 to the condition 3 are met, it may be determined that the authentication state between the first device and the second device is that authentication fails. Optionally, it may be sequentially determined whether the foregoing three conditions are met. If it is determined that any one of the foregoing three conditions is met, it may be determined that the authentication state between the first device and the second device is that authentication fails. In this case, whether another condition can be met may no longer be further determined. In this way, power consumption of a device can be reduced.

Optionally, when the following conditions are met, it may be determined that the authentication state between the first device and the second device is that authentication succeeds.

Condition 1: The first device sends an authentication success packet to the second device.

That the first device sends an authentication success packet to the second device may be determined based on the first indication information. For example, if a value of the first indication information is a preset value (for example, 1), it may be determined that the first device sends an authentication success packet to the second device.

In a process in which the first device authenticates the second device, if the first device successfully authenticates the second device, the first device sends an authentication success packet to the second device. Therefore, if the first device sends an authentication success packet to the second device, it can be determined that the first device successfully authenticates the second device.

Condition 2: The first device receives an authentication success packet sent by the second device.

That the first device receives an authentication success packet sent by the second device may be determined based on the second indication information. For example, if a value of the second indication information is a preset value (for example, 1), it may be determined that the first device receives an authentication success packet sent by the second device.

In a process in which the second device authenticates the first device, if the second device successfully authenticates the first device, the second device sends an authentication success packet to the first device. Therefore, if the first device receives an authentication success packet sent by the second device, it can be determined that the second device successfully authenticates the first device.

When the first device determines that the authentication state between the first device and the second device is that authentication succeeds, the first device and the second device continue to perform normal communication.

When the first device determines that the authentication state between the first device and the second device is that authentication fails, the first device performs a first preset operation, where the first preset operation includes at least one of the following operations.

Operation 1: That the authentication state as that authentication fails is recorded.

Optionally, that authentication between the first device and the second device fails may be recorded in log information.

After the first device and the second device have performed data communication, if the first device detects that the authentication state between the first device and the second device is that authentication fails, the first device may record that the first device and the second device perform data communication when authentication fails.

Operation 2: Sending a packet to the second device is suspended.

When the authentication state between the first device and the second device is that authentication fails, the second device may be an attack device. Therefore, the first device suspends sending a packet to the second device, to to prevent the packet sent by the first device from being maliciously stolen.

Operation 3: A received packet sent by the second device is discarded.

When the authentication state between the first device and the second device is that authentication fails, the second device may be an attack device. Therefore, the first device discards the received packet sent by the second device, to avoid being attacked by the second device.

Operation 4: Authentication with the second device is triggered.

When the authentication state between the first device and the second device is that authentication fails, the authentication may fail due to a reason such as a poor network status. Therefore, re-authentication with the second device may be triggered. The re-authentication may be authentication performed on the second device.

Optionally, the first device may further detect a sequence of packets transmitted between the first device and the second device, to determine whether the sequence of the packets is normal. For example, the first device obtains an identifier of a first packet received from the second device, and the first device performs sequence detection on the first packet based on the identifier of the first packet to obtain a sequence detection result, where the sequence detection result is used to indicate that the sequence of the first packet is normal or abnormal. For example, it is assumed that in a normal communication process, the first device first receives a packet 1 sent by the second device (assuming that a packet identifier is ID1), and then receives a packet 2 sent by the second device (assuming that a packet identifier is ID2). If the first device receives a packet of ID1 after receiving a packet of ID2, the first device may determine that the sequence detection result is that the sequence is abnormal.

Optionally, the first device may further perform basic rule detection on a packet transmitted between the first device and the second device. For example, the basic rule detection may include cyclic redundancy check (cyclic redundancy check, CRC) CRC detection, data length code (data length code, DLC) detection, data range (data range) detection, and the like.

In the embodiment shown in FIG. 6, the first device may obtain the authentication packet information between the first device and the second device, and determine the authentication state between the first device and the second device based on the authentication packet information. When the authentication state between the first device and the second device is that authentication fails, communication between the first device and the second device is interfered, to avoid communication between the first device and the second device when authentication fails, thereby improving security of device communication.

With reference to the embodiment shown in FIG. 7, the following describes an authentication detection manner shown in FIG. 5B. In the embodiment shown in FIG. 7, an example in which the third device detects the authentication state between the first device and the second device is used for description.

FIG. 7 is a schematic flowchart of another authentication detection method according to an embodiment of this application. Refer to FIG. 7. The method may include the following steps.

S701: A third device obtains authentication packet information.

The authentication packet information is used to indicate information about an authentication packet transmitted by the first device and the second device in an authentication process.

The third device may perform the embodiment shown in FIG. 7 in the following multiple manners, to detect an authentication state between the first device and the second device. For a specific manner, refer to the first manner and the second manner in S601. Details are not described herein again.

For related descriptions of the authentication packet information, refer to S601, and details are not described herein again.

The first device and the second device may communicate with each other through Ethernet or CAN. A manner of obtaining the authentication packet information by the third device may vary with a communication manner (for example, Ethernet communication or CAN communication) between the first device and the second device. The following separately describes manners of obtaining the authentication packet information by the third device in different communication manners.

Case 1: The first device and the second device communicate with each other through Ethernet.

In this case, the third device may monitor traffic of a preset port, to obtain the authentication packet information.

A packet transmitted between the first device and the second device passes through the preset port. For example, a communications port may be 8003. The packet transmitted between the first device and the second device is an Ethernet packet.

In a process in which the third device monitors the traffic of the preset port, the third device may monitor the traffic of the preset port based on content in packets that pass through the preset port, to obtain the authentication packet information.

Optionally, the Ethernet packet may include a source address and a destination address. The third device may obtain an Ethernet packet that passes through the preset port, obtain the source address and the destination address from the Ethernet packet, and determine, based on the source address and the destination address and from the Ethernet packets that pass through the preset port, a packet (a packet sent by the first device to the second device or a packet sent by the second device to the first device) transferred between the first device and the second device. The Ethernet packet may further include a packet type. For example, the packet type may be an authentication packet, a data packet, or the like. After the third device determines the packet transmitted between the first device and the second device, the third device may determine, based on a packet type, the authentication packet transferred between the first device and the second device.

In the foregoing manner, the third device may determine, from the packets that pass through the preset port, the authentication packet transferred between the first device and the second device, and collect statistics on the authentication packet transferred between the first device and the second device, to obtain the authentication packet information.

Case 2: The first device communicates with the second device through a CAN.

In this case, the third device obtains an identifier of a CAN packet transmitted between the first device and the second device, and obtains the authentication packet information based on the identifier of the CAN packet.

The identifier of the CAN packet may indicate that a type of the CAN packet is an authentication packet or a data packet. The third device may determine, based on the identifier of the CAN packet, the authentication packet in CAN packets transmitted between the first device and the second device, and collect statistics on the authentication packet transmitted between the first device and the second device, to determine the authentication packet information.

S702: The third device determines an authentication state between the first device and the second device based on the authentication packet information.

The authentication state is that authentication succeeds or that authentication fails.

It should be noted that, for a process of performing S702, refer to the process of performing S602. Details are not described herein again.

In the embodiment shown in FIG. 7, the third device may obtain the authentication packet information between the first device and the second device, and determine the authentication state between the first device and the second device based on the authentication packet information. When the authentication state between the first device and the second device is that authentication fails, the third device interferes with communication between the first device and the second device, to avoid communication between the first device and the second device when authentication fails, thereby improving security of device communication.

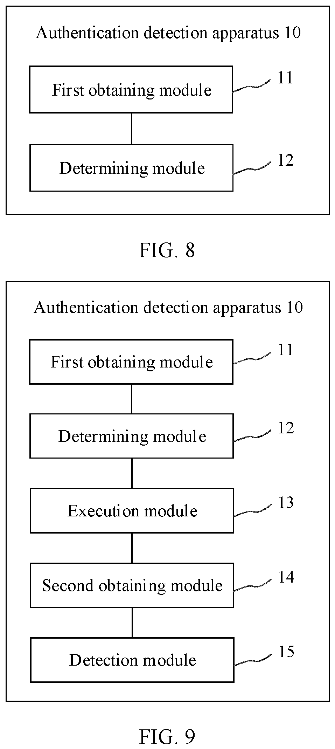

FIG. 8 is a schematic diagram of a structure of an authentication detection apparatus according to an embodiment of this application. Refer to FIG. 8. An authentication detection apparatus 10 may include a first obtaining module 11 and a determining module 12.

The first obtaining module 11 is configured to obtain authentication packet information, where the authentication packet information is used to indicate information about an authentication packet transmitted by a first device and a second device in an authentication process.

The determining module 12 is configured to: determine an authentication state between the first device and the second device based on the authentication packet information, where the authentication state is that authentication succeeds or that authentication fails.

Optionally, the authentication detection apparatus 10 may be the first device, or may be a chip, a processor, or the like disposed in the first device.

Optionally, the first obtaining module 11 may perform S601 in the embodiment shown in FIG. 6.

Optionally, the determining module 12 may perform S602 in the embodiment in FIG. 6.

It should be noted that the authentication detection apparatus shown in this embodiment of this application may perform the technical solutions shown in the foregoing method embodiments. Implementation principles and beneficial effects thereof are similar, and details are not described herein again.

In a possible implementation, the authentication packet information includes at least one piece of the following information:

a quantity of authentication packets received by the first device from the second device;
a quantity of authentication packets sent by the first device to the second device;
first indication information, where the first indication information is used to indicate whether the first device sends an authentication success packet to the second device;
second indication information, where the second indication information is used to indicate whether the first device receives an authentication success packet sent by the second device; or
third indication information, where the third indication information is used to indicate whether an authentication packet is transmitted between the first device and the second device.

In a possible implementation, when at least one of the following conditions is met, the authentication state is that authentication fails:

A quantity of authentication packets that are sent by the second device and that are received by the first device is less than a first threshold;

a quantity of authentication packets sent by the first device to the second device is less than a second threshold; or
the first device does not send an authentication success packet to the second device, and the first device does not receive an authentication success packet sent by the second device.

In a possible implementation, when the following conditions are met, the authentication state is that authentication succeeds:

The first device sends the authentication success packet to the second device; and
the first device receives the authentication success packet sent by the second device.

In a possible implementation, the determining module 12 is specifically configured to:
when a first condition is met, determine the authentication state between the first device and the second device based on the authentication packet information.

In a possible implementation, the first condition includes at least one piece of the following conditions:

the first device does not perform detection on the authentication state between the first device and the second device;
the first device detects that the authentication state between the first device and the second device is that authentication fails; or
the first device determines that the first device and the second device are devices on which authentication state detection is to be performed.

In a possible implementation, the determining module 12 is specifically configured to:

obtain a packet transmitted between the first device and the second device; and
determine, based on attribute information of the packet, that the first device and the second device are devices on which authentication state detection is to be performed, where the attribute information includes at least one piece of the following information: an identifier of the packet, a format of the packet, or a field included in the packet.

In a possible implementation, the packet is a controller area network CAN packet or a CAN-with-flexible-data-rate packet.

In a possible implementation, the first device and the second device communicate with each other through Ethernet, and the first obtaining module 11 is specifically configured to:
monitor traffic of a preset port to obtain the authentication packet information, where packets transmitted between the first device and the second device pass through the preset port.

In a possible implementation, the first device and the second device communicate with each other through a CAN, and the first obtaining module 11 is specifically configured to:

obtain a CAN packet transmitted between the first device and the second device; and
obtain the authentication packet information based on an identifier of the CAN packet.

In a possible implementation, the first obtaining module 11 is specifically configured to:
collect, statistics about authentication packets transmitted between the first device and the second device, to obtain the authentication packet information.

In a possible implementation, the first device is a device in a transportation means, and/or the second device is a device in a transportation means.

In a possible implementation, the first device is an in-vehicle device and/or the second device is an in-vehicle device.

FIG. 9 is a schematic diagram of a structure of another authentication detection apparatus according to an embodiment of this application. Based on the embodiment shown in FIG. 8, refer to FIG. 9. The authentication detection apparatus 10 further includes an execution module 13.

The execution module 13 is configured to: when the determining module determines that an authentication state between a first device and a second device is that authentication fails, perform a first preset operation, where the first preset operation includes at least one of the following operations:

recording the authentication state as that authentication fails;
suspending sending a packet to the second device;
discarding a received packet sent by the second device; or
triggering authentication with the second device.

In a possible implementation, the apparatus further includes a second obtaining module 14 and a detection module 15.

The second obtaining module 14 is configured to obtain an identifier of a first packet received from the second device.

The detection module 15 is configured to: perform sequence detection on the first packet based on the identifier of the first packet to obtain a sequence detection result, where the sequence detection result is used to indicate that a sequence of the first packet is normal or abnormal.

It should be noted that the authentication detection apparatus shown in this embodiment of this application may perform the technical solutions shown in the foregoing method embodiments. Implementation principles and beneficial effects thereof are similar, and details are not described herein again.

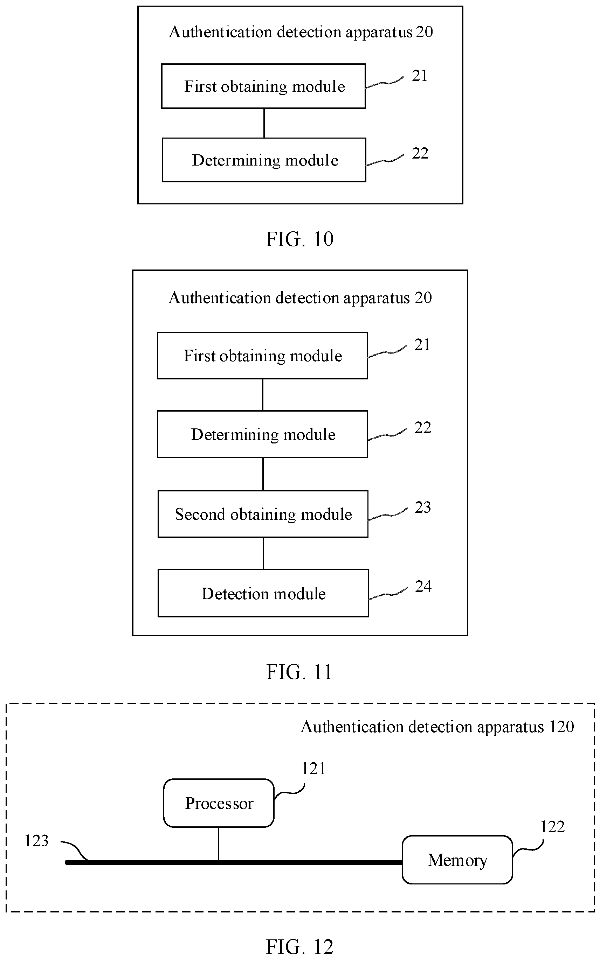

FIG. 10 is a schematic diagram of a structure of still another authentication detection apparatus according to an embodiment of this application. Refer to FIG. 10. The authentication detection apparatus 20 may include a first obtaining module 21 and a determining module 22.

The first obtaining module 21 is configured to obtain authentication packet information, where the authentication packet information is used to indicate information about an authentication packet transmitted by a first device and a second device in an authentication process.

The determining module 22 is configured to: determine an authentication state between the first device and the second device based on the authentication packet information, where the authentication state is that authentication succeeds or that authentication fails.

Optionally, the authentication detection apparatus 10 may be the third device, or may be a chip, a processor, or the like disposed in the third device.

Optionally, the first obtaining module 21 may perform S701 in the embodiment shown in FIG. 7.

Optionally, the determining module 22 may perform S702 in the embodiment in FIG. 7.

It should be noted that the authentication detection apparatus shown in this embodiment of this application may perform the technical solutions shown in the foregoing method embodiments. Implementation principles and beneficial effects thereof are similar, and details are not described herein again.

In a possible implementation, the authentication packet information includes at least one piece of the following information:

a quantity of authentication packets that are sent by the second device and that are received by the first device;

a quantity of authentication packets sent by the first device to the second device;

first indication information, where the first indication information is used to indicate whether the first device sends an authentication success packet to the second device;

second indication information, where the second indication information is used to indicate whether the first device receives an authentication success packet sent by the second device; or

third indication information, where the third indication information is used to indicate whether an authentication packet is transmitted between the first device and the second device.

In a possible implementation, when at least one of the following conditions is met, the authentication state is that authentication fails:

A quantity of authentication packets that are sent by the second device and that are received by the first device is less than a first threshold;

a quantity of authentication packets sent by the first device to the second device is less than a second threshold; or

the first device does not send an authentication success packet to the second device, and the first device does not receive an authentication success packet sent by the second device.

In a possible implementation, when the following conditions are met, the authentication state is that authentication succeeds:

The first device sends the authentication success packet to the second device; and

the first device receives the authentication success packet sent by the second device.

In a possible implementation, the determining module 22 is specifically configured to:

when a first condition is met, determine the authentication state between the first device and the second device based on the authentication packet information.

In a possible implementation, the first condition includes at least one piece of the following conditions:

the third device does not perform detection on the authentication state between the first device and the second device;

the third device detects that the authentication state between the first device and the second device is that authentication fails; or

the third device determines that the first device and the second device are devices on which authentication state detection is to be performed.

FIG. 11 is a schematic diagram of a structure of yet another authentication detection apparatus according to an embodiment of this application. Based on the embodiment shown in FIG. 10, refer to FIG. 11. An authentication detection apparatus 20 further includes a second obtaining module 23 and a detection module 24.

The second obtaining module 23 is configured to obtain an identifier of a first packet, where the first packet is a packet sent by the second device to the first device.

The detection module 24 is configured to: perform sequence detection on the first packet based on the identifier of the first packet to obtain a sequence detection result, where the sequence detection result is used to indicate that a sequence of the first packet is normal or abnormal.

It should be noted that the authentication detection apparatus shown in this embodiment of this application may perform the technical solutions shown in the foregoing method embodiments. Implementation principles and beneficial effects thereof are similar, and details are not described herein again.

FIG. 12 is a schematic diagram of a hardware structure of an authentication detection apparatus according to an embodiment of this application. Refer to FIG. 12. The authentication detection apparatus 120 may include a processor 121 and a memory 122. The processor 121 may communicate with the memory 122. For example, the processor 121 communicates with the memory 122 by using a communications bus 123. The memory 122 is configured to store program instructions. The processor 121 is configured to run the program instructions in the memory to perform the authentication detection method shown in any one of the foregoing method embodiments.

Optionally, the processor 121 may implement the steps in the embodiment shown in FIG. 6.

Optionally, the processor 121 may perform functions of modules (the first obtaining module 11, the determining module 12, the execution module 13, the second obtaining module 14, and the detection module 15) in the embodiments in FIG. 8 and FIG. 9.

The authentication detection apparatus 120 may further include a transmitter and/or a receiver.

Optionally, the authentication detection apparatus 120 may be the first device, or may be a chip disposed in the first device.

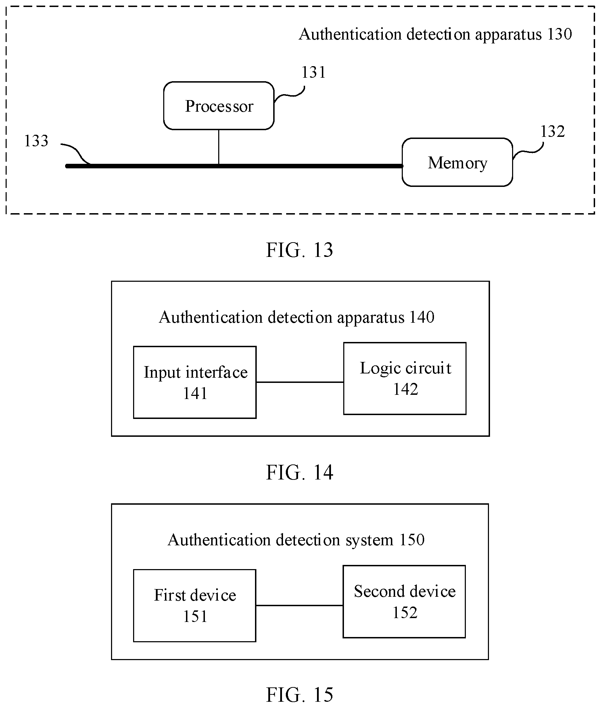

FIG. 13 is a schematic diagram of a hardware structure of another authentication detection apparatus according to an embodiment of this application. Refer to FIG. 13. The authentication detection apparatus 130 may include a processor 131 and a memory 132. The processor 131 may communicate with the memory 132. For example, the processor 131 communicates with the memory 132 by using a communications bus 133. The memory 132 is configured to store program instructions. The processor 131 is configured to run the program instructions in the memory to perform the data processing method shown in any one of the foregoing method embodiments.

Optionally, the processor 131 may implement the steps in the embodiment shown in FIG. 7.

Optionally, the processor 131 may perform functions of modules (the first obtaining module 21, the determining module 22, the second obtaining module 23, and the detection module 24) in the embodiments in FIG. 10 and FIG. 11.

The authentication detection apparatus 130 may further include a transmitter and/or a receiver.

Optionally, the authentication detection apparatus 130 may be the third device, or may be a chip disposed in the third device.

In the embodiments shown in FIG. 12 and FIG. 13, the processor may be a central processing unit (central processing unit, CPU), or may be another general-purpose processor, a digital signal processor (digital signal processor, DSP), an application-specific integrated circuit (application specific integrated circuit, ASIC), or the like. The general-purpose processor may be a microprocessor, or the processor may be any conventional processor, or the like. The steps of the method disclosed with reference to this application may be directly performed by a hardware processor, or may be performed by using a combination of hardware in the processor and a software module.

FIG. 14 is a schematic diagram of a structure of yet another authentication detection apparatus according to an embodiment of this application. Refer to FIG. 14. The authentication detection apparatus 140 includes an input interface 141 and a logic circuit 142,

The input interface 141 is configured to obtain authentication packet information, where the authentication packet information is used to indicate information about an authentication packet transmitted by a first device and a second device in an authentication process.

The logic circuit 142 is configured to: determine an authentication state between the first device and the second device based on the authentication packet information, where the authentication state is that authentication succeeds or authentication fails.

Optionally, the input interface 141 may have functions of the first obtaining module 11 and the second obtaining module 14 in the embodiments in FIG. 8 and FIG. 9. The logic circuit 142 may have functions of the determining module 12, the execution module 13, and the detection module 15 in the embodiments in FIG. 8 and FIG. 9.

Optionally, the input interface 141 may have functions of the first obtaining module 21 and the second obtaining module 23 in the embodiments in FIG. 10 and FIG. 11. The logic circuit 142 may have functions of the determining module 22 and the detection module 24 in the embodiments in FIG. 10 and FIG. 11.

Optionally, the authentication detection apparatus 140 may further include an output interface. The output interface may output the authentication state between the first device and the second device.

FIG. 15 is a schematic diagram of a structure of an authentication detection system according to an embodiment of this application. Refer to FIG. 15. An authentication detection system 150 may include a first device 151 and a second device 152. The first device 151 may perform the method in the embodiment shown in FIG. 6. For an execution process and beneficial effects, refer to the foregoing embodiment. Details are not described herein again. Optionally, the first device 151 may be the authentication detection apparatus 10 shown in FIG. 8 and FIG. 9 or the authentication detection apparatus 120 shown in FIG. 12.

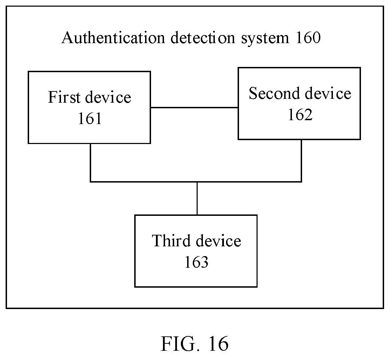

FIG. 16 is a schematic diagram of a structure of another authentication detection system according to an embodiment of this application. Refer to FIG. 16. An authentication detection system 160 may include a first device 161, a second device 162, and a third device 163. The third device 163 may perform the method in the embodiment shown in FIG. 7. For an execution process and beneficial effects, refer to the foregoing embodiments. Details are not described herein again. Optionally, the third device 163 may be the authentication detection apparatus 20 shown in FIG. 10 and FIG. 11 or the authentication detection apparatus 130 shown in FIG. 13.

This application provides a readable storage medium, where the readable storage medium stores a computer program, and the computer program is used to implement the authentication detection method according to any one of the foregoing embodiments.

An embodiment of this application provides a computer program product. The computer program product includes instructions, and when the instructions are executed, a computer is enabled to perform the foregoing authentication detection method.

All or some of the steps of the foregoing method embodiments may be implemented by a program instructing related hardware. The foregoing program may be stored in a computer-readable memory. When the program is executed, the steps of the methods in embodiments are performed. The memory (storage medium) includes: a read-only memory (English: read-only memory, ROM for short), a RAM, a flash memory, a hard disk, a solid state disk, a magnetic tape (English: magnetic tape), a floppy disk (English: floppy disk), an optical disc (English: optical disc), and any combination thereof.

Embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processing unit of another programmable data processing unit to generate a machine, so that instructions executed by a computer or the processing unit of the another programmable data processing unit generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to embodiments of this application without departing from the spirit and scope of this application. This application is intended to cover these modifications and variations of embodiments of this application, provided that they fall within the scope of protection defined by the following claims and their equivalent technologies.

In this application, the term "including" and a variant thereof may refer to non-limitative inclusion; the term "or" and a variant thereof may refer to "and/or". In this application, the terms "first", "second", and the like are intended to distinguish between similar objects but do not necessarily indicate a specific order or sequence. "A plurality of" in this application refers to two or more than two. A term "and/or" describes only an association relationship between associated objects and indicates that there may be three relationships. For example, A and/or B may represent the following three cases: Only A exists, both A and B exist, and only B exists. The character "/" generally indicates an "or" relationship between the associated objects.

**Claims**

1. An authentication detection method, comprising:

   obtaining, by a first device, authentication packet information, wherein the authentication packet information is used to indicate information about an authentication packet transmitted by the first device and a second device in an authentication process; and
   determining, by the first device based on the authentication packet information, an authentication state between the first device and the second device, wherein the authentication state is that authentication succeeds or that authentication fails.

2. The method according to claim 1, wherein the authentication packet information comprises at least one piece of the following information:

   a quantity of authentication packets received by the first device from the second device;
   a quantity of authentication packets sent by the first device to the second device;
   first indication information, wherein the first indication information is used to indicate whether the first device sends an authentication success packet to the second device;
   second indication information, wherein the second indication information is used to indicate whether the first device receives an authentication success packet sent by the second device; or
   third indication information, wherein the third indication information is used to indicate whether an authentication packet is transmitted between the first device and the second device.

3. The method according to claim 2, wherein when at least one of the following conditions is met, the authentication state is that authentication fails:

   a quantity of authentication packets that are sent by the second device and that are received by the first device is less than a first threshold;
   the quantity of authentication packets sent by the first device to the second device is less than a second threshold; or
   the first device does not send the authentication success packet to the second device, and the first device does not receive the authentication success packet sent by the second device.

4. The method according to claim 2 or 3, wherein when the following conditions are met, the authentication state is that authentication succeeds:

   the first device sends the authentication success packet to the second device; and
   the first device receives the authentication success packet sent by the second device.

5. The method according to any one of claims 1 to 4, wherein the determining an authentication state between the first device and the second device based on the authentication packet information comprises: when a first condition is met, determining the authentication state between the first device and the second device based on the authentication packet information.

6. The method according to claim 5, wherein the first condition comprises at least one of the following conditions:

the first device does not detect the authentication state between the first device and the second device;
the first device detects that the authentication state between the first device and the second device is that authentication fails; or
the first device determines that the first device and the second device are devices on which authentication state detection is to be performed.

7. The method according to claim 6, wherein that the first device determines that the first device and the second device are devices on which authentication state detection is to be performed comprises:

obtaining, by the first device, a packet transmitted between the first device and the second device; and
determining, by the first device based on attribute information of the packet, that the first device and the second device are devices on which authentication state detection is to be performed, wherein the attribute information comprises at least one piece of the following information: an identifier of the packet, a format of the packet, or a field comprised in the packet.

8. The method according to any one of claims 1 to 7, wherein when the first device determines that the authentication state between the first device and the second device is that authentication fails, the method further comprises:
performing, by the first device, a first preset operation, wherein the first preset operation comprises at least one of the following operations:

recording the authentication state as that authentication fails;
suspending sending a packet to the second device;
discarding a received packet sent by the second device; or
triggering authentication with the second device.

9. The method according to any one of claims 1 to 8, wherein the method further comprises:

obtaining, by the first device, an identifier of a first packet received from the second device; and
performing, by the first device, sequence detection on the first packet based on the identifier of the first packet, to obtain a sequence detection result, wherein the sequence detection result is used to indicate that a sequence of the first packet is normal or abnormal.

10. An authentication detection method, comprising:

obtaining, by a third device, authentication packet information, wherein the authentication packet information is used to indicate information about an authentication packet transmitted by a first device and a second device in an authentication process; and
determining, by the third device based on the authentication packet information, an authentication state between the first device and the second device, wherein the authentication state is that authentication succeeds or that authentication fails.

11. The method according to claim 10, wherein the authentication packet information comprises at least one piece of the following information:

a quantity of authentication packets that are sent by the second device and that are received by the first device;
a quantity of authentication packets sent by the first device to the second device;
first indication information, wherein the first indication information is used to indicate whether the first device sends an authentication success packet to the second device;
second indication information, wherein the second indication information is used to indicate whether the first device receives an authentication success packet sent by the second device; or
third indication information, wherein the third indication information is used to indicate whether an authentication packet is transmitted between the first device and the second device.

12. The method according to claim 11, wherein when at least one of the following conditions is met, the authentication state is that authentication fails:

the quantity of authentication packets that are sent by the second device and that are received by the first device is less than a first threshold;
the quantity of authentication packets sent by the first device to the second device is less than a second threshold; or

the first device does not send the authentication success packet to the second device, and the first device does not receive the authentication success packet sent by the second device.

13. The method according to claim 11 or 12, wherein when the following conditions are met, the authentication state is that authentication succeeds:

the first device sends the authentication success packet to the second device; and
the first device receives the authentication success packet sent by the second device.

14. The method according to any one of claims 10 to 13, wherein the determining, by the third device based on the authentication packet information, an authentication state between the first device and the second device comprises:
when a first condition is met, determining, by the third device, the authentication state between the first device and the second device based on the authentication packet information.

15. The method according to claim 14, wherein the first condition comprises at least one of the following conditions:

the third device does not detect the authentication state between the first device and the second device;
the third device detects that the authentication state between the first device and the second device is that authentication fails; or
the third device determines that the first device and the second device are devices on which authentication state detection is to be performed.

16. The method according to any one of claims 10 to 15, wherein the method further comprises:

obtaining, by the third device, an identifier of a first packet, wherein the first packet is a packet sent by the second device to the first device;
performing, by the third device, sequence detection on the first packet based on the identifier of the first packet, to obtain a sequence detection result, wherein the sequence detection result is used to indicate that a sequence of the first packet is normal or abnormal.

17. An authentication detection apparatus, comprising a first obtaining module and a determining module, wherein

the first obtaining module is configured to obtain authentication packet information, wherein the authentication packet information is used to indicate information about an authentication packet transmitted by a first device and a second device in an authentication process; and
the determining module is configured to: determine an authentication state between the first device and the second device based on the authentication packet information, wherein the authentication state is that authentication succeeds or that authentication fails.

18. The apparatus according to claim 17, wherein the authentication packet information comprises at least one piece of the following information:

a quantity of authentication packets received by the first device from the second device;
a quantity of authentication packets sent by the first device to the second device;
first indication information, wherein the first indication information is used to indicate whether the first device sends an authentication success packet to the second device;
second indication information, wherein the second indication information is used to indicate whether the first device receives an authentication success packet sent by the second device; or
third indication information, wherein the third indication information is used to indicate whether an authentication packet is transmitted between the first device and the second device.

19. The apparatus according to claim 18, wherein when at least one of the following conditions is met, the authentication state is that authentication fails:

a quantity of authentication packets that are sent by the second device and that are received by the first device is less than a first threshold;
the quantity of authentication packets sent by the first device to the second device is less than a second threshold; or
the first device does not send the authentication success packet to the second device, and the first device does not receive the authentication success packet sent by the second device.

20. The apparatus according to claim 18 or 19, wherein when the following conditions are met, the authentication state is that authentication succeeds:

the first device sends the authentication success packet to the second device; and
the first device receives the authentication success packet sent by the second device.

**21.** The apparatus according to any one of claims 17 to 20, wherein the determining module is specifically configured to:
when a first condition is met, determine the authentication state between the first device and the second device based on the authentication packet information.

**22.** The apparatus according to claim 21, wherein the first condition comprises at least one of the following conditions:

the first device does not detect the authentication state between the first device and the second device;
the first device detects that the authentication state between the first device and the second device is that authentication fails; or
the first device determines that the first device and the second device are devices on which authentication state detection is to be performed.

**23.** The apparatus according to any one of claims 17 to 22, wherein the apparatus further comprises a second obtaining module and a detection module, wherein

the second obtaining module is configured to obtain an identifier of a first packet received from the second device; and
the detection module is configured to: perform sequence detection on the first packet based on the identifier of the first packet, to obtain a sequence detection result, wherein the sequence detection result is used to indicate that a sequence of the first packet is normal or abnormal.

**24.** An authentication detection apparatus, comprising a first obtaining module and a determining module, wherein

the first obtaining module is configured to obtain authentication packet information, wherein the authentication packet information is used to indicate information about an authentication packet transmitted by a first device and a second device in an authentication process; and
the determining module is configured to: determine an authentication state between the first device and the second device based on the authentication packet information, wherein the authentication state is that authentication succeeds or that authentication fails.

**25.** The apparatus according to claim 24, wherein the authentication packet information comprises at least one piece of the following information:

a quantity of authentication packets that are sent by the second device and that are received by the first device;
a quantity of authentication packets sent by the first device to the second device;
first indication information, wherein the first indication information is used to indicate whether the first device sends an authentication success packet to the second device;
second indication information, wherein the second indication information is used to indicate whether the first device receives an authentication success packet sent by the second device; or
third indication information, wherein the third indication information is used to indicate whether an authentication packet is transmitted between the first device and the second device.

**26.** The apparatus according to claim 25, wherein when at least one of the following conditions is met, the authentication state is that authentication fails:

the quantity of authentication packets that are sent by the second device and that are received by the first device is less than a first threshold;
the quantity of authentication packets sent by the first device to the second device is less than a second threshold; or
the first device does not send the authentication success packet to the second device, and the first device does not receive the authentication success packet sent by the second device.

**27.** The apparatus according to claim 25 or 26, wherein when the following conditions are met, the authentication state is that authentication succeeds:

the first device sends the authentication success packet to the second device; and
the first device receives the authentication success packet sent by the second device.

**28.** The apparatus according to any one of claims 24 to 27, wherein the determining module is specifically configured to:
when a first condition is met, determine, the authentication state between the first device and the second device based on the authentication packet information.

**29.** The apparatus according to claim 28, wherein the first condition comprises at least one of the following conditions:

the third device does not detect the authentication state between the first device and the second device;

the third device detects that the authentication state between the first device and the second device is that authentication fails; or
the third device determines that the first device and the second device are devices on which authentication state detection is to be performed.

30. The apparatus according to any one of claims 24 to 29, wherein the apparatus further comprises a second obtaining module and a detection module, wherein

the second obtaining module is configured to obtain an identifier of a first packet, wherein the first packet is a packet sent by the second device to the first device; and
the detection module is configured to: perform sequence detection on the first packet based on the identifier of the first packet, to obtain a sequence detection result, wherein the sequence detection result is used to indicate that a sequence of the first packet is normal or abnormal.

31. An authentication detection apparatus, wherein the authentication detection apparatus comprises a memory and a processor, the memory stores computer program instructions, and the processor runs the computer program instructions to perform the method according to any one of claims 1 to 9 or the method according to any one of claims 10 to 16.

32. An authentication detection apparatus, comprising an input interface and a logic circuit, wherein

the input interface is configured to obtain authentication packet information, wherein the authentication packet information is used to indicate information about an authentication packet transmitted by a first device and a second device in an authentication process; and
the logic circuit is configured to: determine an authentication state between the first device and the second device based on the authentication packet information, wherein the authentication state is that authentication succeeds or that authentication fails.

33. A computer storage medium, comprising computer instructions, wherein when the computer instructions are run on a processor, the method according to any one of claims 1 to 9 or the method according to any one of claims 10 to 16 is implemented.

34. A computer program product, wherein when the computer program product runs on a processor, the method according to any one of claims 1 to 9 or the method according to any one of claims 10 to 16 is implemented.

FIG. 1

EP 4 181 093 A1

Vehicle

FIG. 2A

FIG. 2B

| First device<br>device ID 1, device<br>certificate 1) | | Second device<br>(device ID 2, device<br>certificate 2) |
|---|---|---|

S301: Packet 1
(including the device ID 1 and the device certificate 1)

S302: Verify validity of the device
certificate 1

S303: Packet 2
(including a random number)

S304: Calculate a signature based on
the random number

S305: Packet 3
(including the device ID 1 and the signature)

S306: Verify the signature

S307: Authentication success packet

FIG. 3

```
┌─────────────────────┐                              ┌─────────────────────┐
│    First device     │                              │    Second device    │
│  (symmetric key k)   │                              │  (symmetric key k)   │
└─────────────────────┘                              └─────────────────────┘
          │                                                     │
          │                              ┌──────────────────────┴──────────────┐
          │                              │ S401: Generate a random number       │
          │                              └──────────────────────┬──────────────┘
          │        S402: Packet 1                               │
          │◄─────(including the random number)──────────────────┤
          │                                                     │
┌─────────┴──────────────────────┐                              │
│ S403: Calculate a signature based on │                        │
│       the random number              │                        │
└─────────┬──────────────────────┘                              │
          │        S404: Packet 2                               │
          ├──────(including the signature)────────────────────►│
          │                                                     │
          │                              ┌──────────────────────┴──────────────┐
          │                              │  S405: Verify the signature           │
          │                              └──────────────────────┬──────────────┘
          │   S406: Authentication success packet               │
          │◄────────────────────────────────────────────────────┤
          │   S407: Authentication success response packet       │
          ├────────────────────────────────────────────────────►│
          │                                                     │
```

FIG. 4

FIG. 5A

FIG. 5B

| | S601 |
| A first device obtains authentication packet information | |

| | S602 |
| The first device determines an authentication state between the first device and a second device based on the authentication packet information | |

FIG. 6

| | S701 |
| A third device obtains authentication packet information | |

| | S702 |
| The third device determines an authentication state between a first device and a second device based on the authentication packet information | |

FIG. 7

Authentication detection apparatus 10

First obtaining module ⟋ 11

Determining module ⟋ 12

FIG. 8

Authentication detection apparatus 10

First obtaining module ⟋ 11

Determining module ⟋ 12

Execution module ⟋ 13

Second obtaining module ⟋ 14

Detection module ⟋ 15

FIG. 9

Authentication detection apparatus 20

First obtaining module — 21

Determining module — 22

FIG. 10

Authentication detection apparatus 20

First obtaining module — 21

Determining module — 22

Second obtaining module — 23

Detection module — 24

FIG. 11

Authentication detection apparatus 120

121

Processor

123

Memory — 122

FIG. 12

Authentication detection apparatus 130

131

Processor

133

Memory

132

FIG. 13

Authentication detection apparatus 140

Input interface
141

Logic circuit
142

FIG. 14

Authentication detection system 150

First device
151

Second device
152

FIG. 15

Authentication detection system 160

First device
161

Second device
162

Third device
163

FIG. 16

# EP 4 181 093 A1

## INTERNATIONAL SEARCH REPORT

International application No.

**PCT/CN2020/103530**

### A. CLASSIFICATION OF SUBJECT MATTER

H04L 29/06(2006.01)i

According to International Patent Classification (IPC) or to both national classification and IPC

### B. FIELDS SEARCHED

Minimum documentation searched (classification system followed by classification symbols)

H04L; E05B; G07C

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; USTXT; CNKI: 智能汽车, 无人汽车, 无人驾驶, 智能驾驶, 车联网, 车载, 认证, 成功, 失败, 认证状态, 服务器, 网关, 第一, 第二, 百度, driverless car, intelligent driving, authent+, server, gateway, IoV, vehicle, success, fail, authentication stat+, first, second, baidu

### C. DOCUMENTS CONSIDERED TO BE RELEVANT

| Category* | Citation of document, with indication, where appropriate, of the relevant passages | Relevant to claim No. |
|---|---|---|
| X | CN 105471583 A (BYD COMPANY LTD.) 06 April 2016 (2016-04-06) description, paragraphs [0025]-[0040] | 1-34 |
| A | CN 108111477 A (TOYOTA JIDOSHA KABUSHIKI KAISHA) 01 June 2018 (2018-06-01) entire document | 1-34 |
| A | CN 103770747 A (GUANGZHOU AUTOMOBILE GROUP CO., LTD.) 07 May 2014 (2014-05-07) entire document | 1-34 |
| A | CN 109695383 A (TOYOTA JIDOSHA KABUSHIKI KAISHA et al.) 30 April 2019 (2019-04-30) entire document | 1-34 |
| A | US 10131322 B2 (VERIDIUM IP LTD.) 20 November 2018 (2018-11-20) entire document | 1-34 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **07 April 2021** | **13 April 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/103530**

| Patent document cited in search report | | | Publication date (day/month/year) | Patent family member(s) | | | Publication date (day/month/year) |
|---|---|---|---|---|---|---|---|
| CN | 105471583 | A | 06 April 2016 | CN | 105471583 | B | 29 January 2019 |
| CN | 108111477 | A | 01 June 2018 | CN | 108111477 | B | 29 September 2020 |
| | | | | US | 10057259 | B2 | 21 August 2018 |
| | | | | DE | 102017124640 | A1 | 24 May 2018 |
| | | | | JP | 2018085625 | A | 31 May 2018 |
| | | | | JP | 6465098 | B2 | 06 February 2019 |
| | | | | US | 2018145977 | A1 | 24 May 2018 |
| CN | 103770747 | A | 07 May 2014 | CN | 103770747 | B | 13 January 2016 |
| CN | 109695383 | A | 30 April 2019 | CN | 109695383 | B | 12 January 2021 |
| | | | | US | 2019122471 | A1 | 25 April 2019 |
| | | | | JP | 2019078040 | A | 23 May 2019 |
| | | | | US | 10706650 | B2 | 07 July 2020 |
| | | | | DE | 102018217158 | A1 | 25 April 2019 |
| US | 10131322 | B2 | 20 November 2018 | US | 2018009417 | A1 | 11 January 2018 |
| | | | | WO | 2015191913 | A2 | 17 December 2015 |
| | | | | EP | 3154830 | A2 | 19 April 2017 |
| | | | | CA | 2952084 | A1 | 17 December 2015 |
| | | | | WO | 2015191913 | A3 | 17 March 2016 |
| | | | | AU | 2015274445 | B2 | 23 May 2019 |
| | | | | JP | 2017531112 | A | 19 October 2017 |
| | | | | EP | 3154830 | A4 | 20 June 2018 |
| | | | | US | 2019054899 | A1 | 21 February 2019 |
| | | | | KR | 20170028357 | A | 13 March 2017 |
| | | | | CN | 106575454 | A | 19 April 2017 |
| | | | | US | 10414377 | B2 | 17 September 2019 |
| | | | | JP | 6827918 | B2 | 10 February 2021 |
| | | | | AU | 2015274445 | A1 | 02 February 2017 |
| | | | | BR | 112016029038 | A2 | 22 August 2017 |
| | | | | US | 9783162 | B2 | 10 October 2017 |
| | | | | US | 2017174180 | A1 | 22 June 2017 |
| | | | | US | 9563998 | B2 | 07 February 2017 |
| | | | | US | 2015363986 | A1 | 17 December 2015 |
| | | | | AU | 2019203222 | A1 | 06 June 2019 |

Form PCT/ISA/210 (patent family annex) (January 2015)